(19) Europäisches Patentamt
European Patent Office
Office européen des brevets

(11) **EP 4 403 306 A1**

(12) **EUROPEAN PATENT APPLICATION**
published in accordance with Art. 153(4) EPC

(43) Date of publication:
**24.07.2024 Bulletin 2024/30**

(51) International Patent Classification (IPC):
**B24D 3/00** (2006.01)   **C09K 3/14** (2006.01)

(21) Application number: **21957566.9**

(52) Cooperative Patent Classification (CPC):
**A46B 17/08; A46D 1/04; A46D 9/00; B24D 3/00; B24D 11/00; B24D 13/14; C09K 3/14**

(22) Date of filing: **17.09.2021**

(86) International application number:
**PCT/JP2021/034351**

(87) International publication number:
**WO 2023/042385 (23.03.2023 Gazette 2023/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **Taimei Chemicals Co., Ltd.**
**Kamiina-gun, Nagano 399-4597 (JP)**
• **Xebec Technology Co., Ltd.**
**Tokyo 102-0083 (JP)**

(72) Inventors:
• **KARASAWA, Makikazu**
**Kamiina-gun, Nagano 399-4597 (JP)**
• **MARUYAMA, Yuki**
**Kamiina-gun, Nagano 399-4597 (JP)**
• **AKASHI, Mitsuhisa**
**Kamiina-gun, Nagano 399-4597 (JP)**
• **FUKUSHIMA, Keisuke**
**Tokyo 102-0083 (JP)**

(74) Representative: **Plougmann Vingtoft a/s**
**Strandvejen 70**
**2900 Hellerup (DK)**

(54) **LINEAR ABRASIVE MEMBER FOR POLISHING BRUSH, AND POLISHING BRUSH**

(57)   A wire-shaped grinding element (10A, 10B) is used as a grinding element for a polishing brush. The wire-shaped grinding element (10A, 10B) includes inorganic filaments and a resin that impregnates the inorganic filaments and is cured. The inorganic filaments contain 80 to 90% by weight of an alumina component and 20 to 10% by weight of a silica component. The crystal structure of the inorganic filaments includes intermediate alumina. The silica component is in an amorphous state. The BET specific surface area of the inorganic filaments is 30 m$^2$/g or smaller.

FIG.8

**Description**

Field

The present invention relates to a wire-shaped grinding element for a polishing brush including inorganic filaments, and a polishing brush including a grinding element bundle of a plurality of wire-shaped grinding elements.

Background

A grinding element used for a grinder is described in Patent Literature 1. The grinding element in Patent Literature 1 is formed of inorganic filaments impregnated with a resin. The inorganic filaments contain 80 to 90% by weight of an alumina component and 20 to 10% by weight of a silica component. The crystal structure of the inorganic filaments includes mullite crystals and intermediate alumina. The average grain size of the mullite crystals is 25 nm to 70 nm. In the grinding element in Patent Literature 1, the hardness of the inorganic filaments is high because the inorganic filaments contain 80% by weight or more of an alumina component. In addition, the grinding power for polishing or grinding a workpiece is large because the average grain size of the mullite crystals is 25 nm or more.
A polishing brush including wire-shaped grinding elements made of resin-impregnated and cured inorganic filaments is described in Patent Literature 2. The polishing brush in Patent Literature 2 has a grinding element bundle of a plurality of wire-shaped grinding elements, and a grinding element holder holding one end portion of the grinding element bundle. The wire-shaped grinding elements in Patent Literature 2 are formed by impregnating and curing an assembly of alumina fiber filaments with an epoxy resin or silicone resin and forming the assembly into a wire-like shape.

Citation List

Patent Literature

Patent Literature 1: Japanese Patent Application Laid-open Publication No. H10-183427
Patent Literature 2: WO 2014/208566

Summary

Technical Problem

Here, if the grinding element for a grinder described in Patent Literature 1 is formed into a wire-like shape and used as a wire-shaped grinding element for a polishing brush, the polishing brush can have a sufficient grinding power. However, the inventors of the present invention have conducted elaborate studies and found that such a polishing brush has room for improvement in wear resistance of the wire-shaped grinding element.
In view of the above, an object of the present invention is to provide a wire-shaped grinding element for a polishing brush that has excellent wear resistance while ensuring grinding power. Another object is to provide a polishing brush including such a wire-shaped grinding element for a polishing brush.

Solution to Problem

The inventors of the present invention have conducted elaborate studies and found that when a grinding element that includes inorganic filaments containing 80 to 90% by weight of an alumina component and 20 to 10% by weight of a silica component and in which the crystal structure of the inorganic filaments includes intermediate alumina and mullite is employed as a wire-shaped grinding element for a polishing brush, the presence of crystallites of mullite in the crystal structure affects the wear resistance of the wire-shaped grinding element. More specifically, when the polishing brush grinds or polishes a workpiece, the distal end of the wire-shaped grinding element is brought into contact with a section to be polished in the workpiece with the polishing brush being rotated around a predetermined axis of rotation. Thus, unlike a grinder that performs polishing with a grinding element in contact with a surface of a workpiece, the wire-shaped grinding element repeats intermittently impacting a section to be polished in the workpiece during the polishing process. Since the wire-shaped grinding element including inorganic filaments and a resin has elasticity, the trajectory drawn by the distal end varies with rotation of the polishing brush, and the wire-shaped grinding element intermittently impacts the workpiece from various directions. Here, the inorganic filaments become brittle as mullitization develops. Thus, the wire-shaped grinding element having mullite crystals is prone to brittle collapse against such intermittent impact from multiple directions. As a result, the wire-shaped grinding element having mullite crystals in the crystal structure of the inorganic filaments is more susceptible to wear.

Meanwhile, the inventors of the present invention have conducted elaborate studies and found that when a grinding element including inorganic filaments containing 80 to 90% by weight of an alumina component and 20 to 10% by weight of a silica component is employed as a wire-shaped grinding element for a polishing brush, the grinding power of the wire-shaped grinding element can be ensured even without mullite crystals as long as the specific surface area of the inorganic filaments is a predetermined value or smaller. In other words, as long as the inorganic filaments contain 80% or more by weight of an alumina component, the hardness of the wire-shaped grinding element can be ensured. The specific surface area of the inorganic filaments of a predetermined value or smaller can stop or prevent the inorganic filaments from absorbing moisture in the air and inhibiting curing of the resin that impregnates the inorganic filaments. Furthermore, the specific surface area of the inorganic filaments of a predetermined value or smaller can prevent bubbles from remaining in the resin that impregnates the inorganic filaments. Thus, it is possible to avoid nonuniform curing of the resin due to the bubbles and thus occurrence of unevenness in the wire-shaped grinding element. As a result of these, the wire-shaped grinding element can be prevented from becoming brittle. Thus, brittle collapse of the inorganic filaments can be prevented when the wire-shaped grinding element comes into contact with a workpiece, so that the inorganic filaments bite into the workpiece. When the polishing brush polishes or grinds a workpiece, unlike when a grinder polishes a workpiece, the wire-shaped grinding element intermittently impacts the workpiece from various directions. Thus, the wire-shaped grinding element can have a predetermined grinding power. The present invention is based on these findings.

In order to solve the above problem, a wire-shaped grinding element for a polishing brush according to the present invention includes inorganic filaments and a resin that impregnates the inorganic filaments and is cured, wherein the inorganic filaments contain 80 to 90% by weight of an alumina component and 20 to 10% by weight of a silica component, the inorganic filaments have a crystal structure including intermediate alumina, the silica component is in an amorphous state, and the inorganic filaments have a BET specific surface area of 30 $m^2$/g or smaller.

In the wire-shaped grinding element for a polishing brush according to the present invention, the silica component of the inorganic filaments is in an amorphous state. Thus, the crystal structure of the inorganic filaments does not have mullite crystals. Thus, the inorganic filaments are not made brittle by mullitization. In the wire-shaped grinding element, the BET specific surface area of the inorganic filaments is 30 $m^2$/g or smaller. The inorganic filaments with such a BET specific surface area have fewer pores and unevenness and therefore are prevented from absorbing moisture. Thus, it is possible to stop or prevent the inorganic filaments from absorbing moisture in the air and inhibiting curing of the resin that impregnates the inorganic filaments. Furthermore, since the inorganic filaments with such a BET specific surface area have fewer pores and unevenness, it is possible to avoid or prevent occurrence of unevenness in the wire-shaped grinding element due to the bubbles remaining in the resin that impregnates the inorganic filaments. Thus, the wire-shaped grinding element can be prevented from becoming brittle. Thus, when the wire-shaped grinding element for a polishing brush intermittently impacts a section to be polished in a workpiece from multiple directions, brittle collapse of the wire-shaped grinding element for a polishing brush can be stopped or prevented. Thus, the wear resistance of the wire-shaped grinding element for a polishing brush is improved.

On the other hand, since the inorganic filaments contain 80% by weight or more of an alumina component, the hardness of the inorganic filaments is easily ensured. The inorganic filaments having a BET specific surface area of 30 $m^2$/g or smaller can prevent the wire-shaped grinding element from becoming brittle due to moisture absorption which would inhibit curing of the resin. Furthermore, if the BET specific surface area is small, it is possible to prevent the wire-shaped grinding element from becoming brittle as a result of occurrence of unevenness in the wire-shaped grinding element due to bubbles in the resin that impregnates the inorganic filaments. Thus, brittle collapse of the inorganic filaments can be prevented when the wire-shaped grinding element impacts a workpiece, so that the inorganic filaments bite into the workpiece. In addition, when polishing a workpiece, the wire-shaped grinding element for a polishing brush intermittently impacts a section to be polished in the workpiece from multiple directions. Thus, the grinding power of the wire-shaped grinding element for a polishing brush can be ensured even when its crystal structure does not contain mullite crystals.

In the present invention, it is preferable that the BET specific surface area of the inorganic filaments is 15 $m^2$/g or smaller. In this way, the grinding power of the wire-shaped grinding element is improved compared to when the BET specific surface area is greater than 15 $m^2$/g. In this way, the wear resistance is improved compared to when the BET specific surface area is greater than 15 $m^2$/g.

In the present invention, it is preferable that the alumina component of the inorganic filaments is 85% by weight or more. With such a configuration, it is easier to increase the hardness of the inorganic filaments. Thus, it is easier to ensure the grinding power of the wire-shaped grinding element for a polishing brush.

In the present invention, the resin may be an epoxy resin.

A polishing brush according to the present invention includes a plurality of wire-shaped grinding elements disposed in parallel with each other and a grinding element holder holding one end portion of each of the wire-shaped grinding elements, wherein each of the wire-shaped grinding elements is the above wire-shaped grinding element for a polishing brush.

The polishing brush according to the present invention can prevent or reduce wear of the wire-shaped grinding elements while ensuring its grinding power.

Brief Description of Drawings

FIG. 1 is a perspective view of a polishing brush.
FIG. 2 is a flowchart of a method of producing wire-shaped grinding elements for a polishing brush.
FIG. 3 is a diffraction chart obtained by irradiating inorganic filaments of Example 1 with X-rays.
FIG. 4 is a diffraction chart obtained by irradiating inorganic filaments of Comparative Example 2 with X-rays.
FIG. 5 is an illustration of a method of measuring grinding power and wear resistance.
FIG. 6 is a graph illustrating the relation between the bristle length of the polishing brush and the amount of side surface dullness.
FIG. 7 is a graph illustrating the relation between the bristle length of the polishing brush and the amount of wear.
FIG. 8 is a photograph of the wire-shaped grinding elements in Examples 1 and 2 and Comparative Example 1.

Description of Embodiments

A polishing brush according to embodiments of the present invention will be described below with reference to the drawings.

(Polishing Brush)

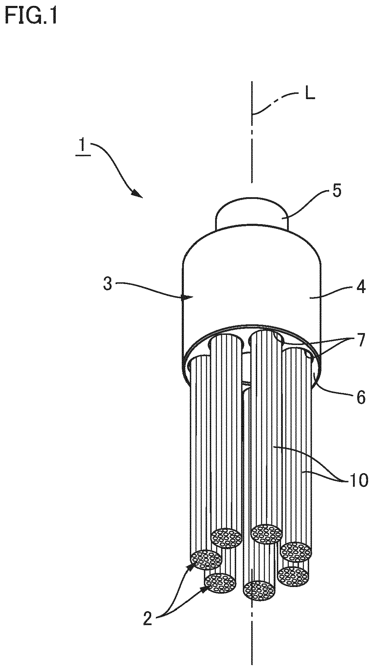

FIG. 1 is a perspective view of a polishing brush. As illustrated in FIG. 1, a polishing brush 1 has a plurality of grinding element bundles 2 and a grinding element holder 3 holding one end portion of each of the grinding element bundles 2. The grinding element holder 3 has a circular body 4 and a shaft 5 extending coaxially from the body 4. The shaft 5 is an attachment part for attaching the polishing brush 1 to a machine tool or the like. A front end surface of the body 4 located on the side opposite to the shaft 5 is a grinding element-holding surface 6. The grinding element-holding surface 6 has a plurality of grinding element-holding recesses 7. In this example, seven grinding element-holding recesses 7 are provided at equiangular intervals around the axis of the grinding element holder 3.

Each grinding element bundle 2 includes a plurality of wire-shaped grinding elements 10 (wire-shaped grinding elements for a polishing brush) disposed in parallel with each other. One end portion of each of the wire-shaped grinding elements 10 is inserted in the corresponding grinding element-holding recess 7 and fixed to the grinding element holder 3 by adhesive. In the example illustrated in FIG. 1, the cross-section of the wire-shaped grinding element 10 is circular. The cross-section of the wire-shaped grinding element 10 is not limited to a circular shape and may be polygonal.

The wire-shaped grinding element 10 includes inorganic filaments and a resin that impregnates the inorganic filaments and is cured. The inorganic filaments contain 80 to 90% by weight of an alumina component and 20 to 10% by weight of a silica component.

The polishing brush 1 is attached to the head of a machine tool and used for polishing or grinding a workpiece. In machining the workpiece, the polishing brush 1 is rotated around the axis L. Thus, the polishing brush 1 can be called a rotary polishing brush.

The grinding element holder 3 may have a single circular grinding element-holding recess 7 in its center. In this case, the polishing brush 1 has one grinding element bundle 2 in the center of the grinding element holder. The grinding element holder 3 may have an annular grinding element-holding recess 7 around the axis L. In this case, the polishing brush 1 has one annular grinding element bundle 2 of a plurality of wire-shaped grinding elements 10 arranged annularly around the axis L.

(Method of Producing Wire-Shaped Grinding Element)

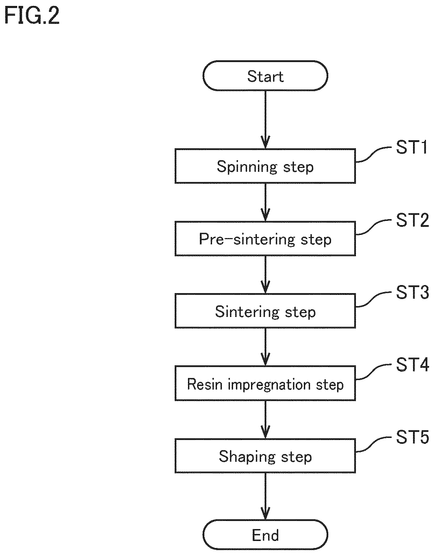

FIG. 2 is a flowchart of a method of producing the wire-shaped grinding elements 10. As illustrated in FIG. 2, the method of producing the wire-shaped grinding elements 10 includes a spinning step ST1, a pre-sintering step ST2, a sintering step ST3, a resin impregnation step ST4, and a shaping step ST5 in this order. In the spinning step ST1, an aqueous spinning solution containing basic aluminum chloride, colloidal silica, and polyvinyl alcohol is dry-spun to produce precursor fibers. In the pre-sintering step ST2, the precursor fibers are fired at 900°C or higher and 1300°C or lower and turned into ceramics to produce inorganic filaments. In the sintering step ST3, the inorganic filaments are heated at high temperatures of 1300°C or higher for around 20 seconds. The heating temperature in the sintering step ST3 is higher than the heating temperature in the pre-sintering step ST2.

In the resin impregnation step ST4, the inorganic filaments are aligned as appropriate to form an assembly. In the resin impregnation step ST4, the assembly is impregnated with a thermosetting resin such as an epoxy resin or phenolic resin, and the resin is cured. In the shaping step ST5, the resin-impregnated and cured assembly is cut into a predetermined length. This step yields the wire-shaped grinding elements 10. Here, the assembly impregnated with the resin is drawn out to pass through a die having an opening with a predetermined shape and then cured, so that the cross-sectional shape of the wire-shaped grinding element 10 can be formed into a shape corresponding to the shape of the opening of the die.

A specific example of the production method will be described below. First, in the spinning step ST1, 2.5 kg of partially hydrolyzed polyvinyl alcohol with the average degree of polymerization of 1700 is dissolved in 34 kg of an aqueous solution of basic aluminum chloride containing 13.2% by weight of aluminum ions and 11.45% by weight of chlorine ions, and 7.5 kg of colloidal silica containing 20% by weight of silicon dioxide, to prepare a spinning solution with a viscosity of about 1000 poise at 20°C. Next, the spinning solution is dry-spun by being extruded through a spinning nozzle with 1000 holes. In the pre-sintering step ST2, the spun inorganic filaments are fired at 900°C to 1300°C and turned into ceramics to produce an assembly. Subsequently, in the sintering step ST3, the assembly is passed through a pipe furnace at 1300°C to 1400°C and continuously wound onto a first bobbin under tension. In doing so, the speed of passing the assembly is adjusted so that the heating time is 20 seconds.

In the resin impregnation step ST4, the assembly is unrolled from the first bobbin, passed through a resin tank storing an uncured resin and a heating furnace, and wound onto a second bobbin. Here, the assembly impregnated with the resin by passing through the resin tank is passed through a die having an opening with a predetermined shape before it reaches the heating furnace, so that the cross-sectional shape of the wire-shaped grinding element 10 can be formed into a shape corresponding to the shape of the opening of the die. The resin with which the assembly is impregnated can have the following composition.

Epoxy resin (jER828 manufactured by Mitsubishi Chemical Corporation) 60 parts by weight
Epoxy resin (jER1001 manufactured by Mitsubishi Chemical Corporation) 40 parts by weight
Boron trifluoride monoethyl amine 2.5 parts by weight Methyl ethyl ketone 35 parts by weight

In the shaping step ST5, the resin-impregnated and cured assembly is unrolled from the second bobbin and cut into a predetermined size. In the shaping step ST5, the resin-impregnated and cured assembly may be cut into a predetermined size without being wound onto the second bobbin.

(Example 1)

A wire-shaped grinding element 10A in Example 1 includes inorganic filaments and a resin that impregnates the inorganic filaments. The inorganic filaments contain 85% by weight of an alumina component and 15% by weight of a silica component. The crystal structure of the inorganic filaments includes intermediate alumina. The silica component is in an amorphous state. In other words, the crystal structure of the inorganic filaments does not have mullite crystals. The BET specific surface area of the inorganic filaments is 15 $m^2$/g or smaller. In this example, the BET specific surface area of the inorganic filaments is 12.5 $m^2$/g.

In production of the wire-shaped grinding element 10A in Example 1, the heating temperature in the pre-sintering step ST2 is 1000°C. The heating temperature in the sintering step ST3 is 1350°C. The heating time in the sintering step ST3 is 20 seconds.

The BET specific surface area is the specific surface area determined by a gas adsorption method (BET method). The BET specific surface area is measured after the sintering step ST3 and before the resin impregnation step ST4.

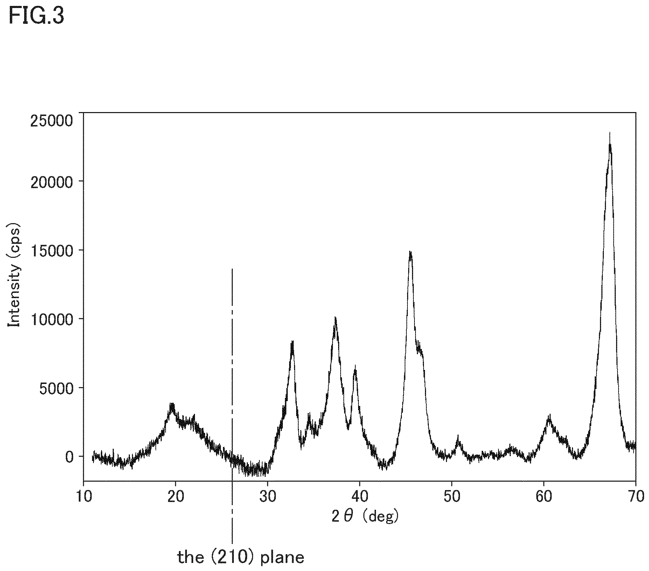

Here, the absence of mullite crystals in the crystal structure of the inorganic filaments was evaluated using X-ray diffraction. Specifically, in Example 1, after the sintering step ST3 and before the resin impregnation step ST4, the inorganic filaments were irradiated with X-rays and a diffraction chart was obtained. It was then confirmed that the peak of the diffraction line from the (210) plane of mullite did not appear at around 2θ of 26° in the diffraction chart. FIG. 3 is a diffraction chart obtained by irradiating inorganic filaments of Example 1 with X-rays. In the diffraction chart in FIG. 3, there is no peak at around 2θ of 26°.

(Example 2)

In a wire-shaped grinding element 10B in Example 2, the inorganic filaments contain 85% by weight of an alumina component and 15% by weight of a silica component. The crystal structure of the inorganic filaments includes intermediate alumina. The silica component is in an amorphous state. In other words, the crystal structure of the inorganic filaments does not have mullite crystals. The silica component is in an amorphous state. The BET specific surface area of the inorganic filaments is greater than 15 $m^2/g$ and 30 $m^2/g$ or smaller. In this example, the BET specific surface area of the inorganic filaments is 28.7 $m^2/g$.

In production of the wire-shaped grinding element 10B in Example 2, the heating temperature in the pre-sintering step ST2 is 1000°C. The heating temperature in the sintering step ST3 is 1330°C. The heating time in the sintering step ST3 is 20 seconds.

Although not illustrated in the figure, there is no peak at around 2θ of 26° in the diffraction chart obtained by irradiating the inorganic filaments in Example 2 with X-rays.

The heating temperature in the sintering step ST3 in Example 1 is higher than the heating temperature in the sintering step ST3 in Example 2. As a result, the BET specific surface area of the inorganic filaments in the wire-shaped grinding element 10A in Example 1 is smaller than half the BET specific surface area of the inorganic filaments in the wire-shaped grinding element 10B in Example 2. In other words, the BET specific surface area of the inorganic filaments can be controlled by controlling the heating temperature and the heating time in the sintering step ST3 in production of the wire-shaped grinding element 10.

The crystal structure of the inorganic filaments in the wire-shaped grinding element 10A in Example 1 is the state immediately before mullite crystals appear in the crystal structure by sintering.

(Comparative Example 1)

In a wire-shaped grinding element 10C in Comparative Example 1, the inorganic filaments contain 85% by weight of an alumina component and 15% by weight of a silica component. The crystal structure of the inorganic filaments includes intermediate alumina. The silica component is in an amorphous state. In other words, the crystal structure of the inorganic filaments does not have mullite crystals. The BET specific surface area of the inorganic filaments is greater than 30 $m^2/g$. In this example, the BET specific surface area of the inorganic filaments is 51.0 $m^2/g$.

In production of the wire-shaped grinding element 10C in Comparative Example 1, the heating temperature in the pre-sintering step ST2 is 1000°C. The heating temperature in the sintering step ST3 is 1310°C. The heating time in the sintering step ST3 is 20 seconds.

The heating temperature in the sintering step ST3 in Comparative Example 1 is lower than the heating temperature in the sintering step ST3 in Examples 1 and 2. As a result, the BET specific surface area of the inorganic filaments in Comparative Example 1 is greater than the BET specific surface area of the inorganic filaments in Examples 1 and 2. The BET specific surface area of the inorganic filaments can be controlled by adjusting the heating temperature and the heating time in the sintering step ST3.

Here, although not illustrated in the figure, there is no peak at around 2θ of 26° in the diffraction chart obtained by irradiating the inorganic filaments in Comparative Example 1 with X-rays.

(Comparative Example 2)

A wire-shaped grinding element 10 in Comparative Example 2 includes inorganic filaments and a resin that impregnates the inorganic filaments. The inorganic filaments contain 85% by weight of an alumina component and 15% by weight of a silica component. The crystal structure of the inorganic filaments includes mullite crystals and intermediate alumina. The average grain size of the mullite crystal grains is 30 nm or more. The BET specific surface area of the inorganic filaments is 0.5 $m^2/g$.

In production of the wire-shaped grinding element 10 in Comparative Example 2, the heating temperature in the pre-sintering step ST2 is 1000°C. The heating temperature in the sintering step ST3 is 1390°C. The heating time in the sintering step ST3 is 30 seconds.

The heating temperature in the sintering step ST3 in Comparative Example 2 is higher than the heating temperature in the sintering step ST3 in Examples 1 and 2. The heating time in the sintering step ST3 in Comparative Example 2 is longer than the heating time in the sintering step ST3 in Examples 1 and 2. As a result, the wire-shaped grinding element 10 in Comparative Example 2 has mullite crystals in the crystal structure. In other words, the presence/absence of mullite crystals in the crystal structure of the inorganic filaments can be controlled by controlling the heating temperature and the heating time in the sintering step ST3 in production of the wire-shaped grinding element 10.

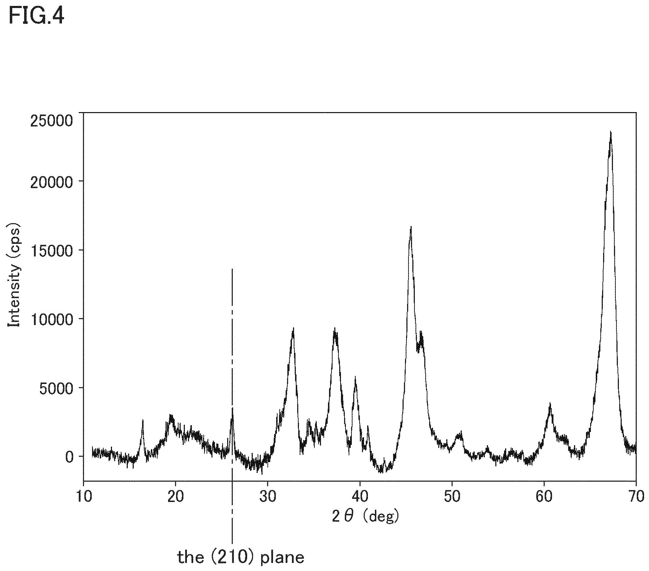

Here, the presence of mullite crystals in the crystal structure of the inorganic filaments was evaluated using X-ray diffraction. Specifically, in Comparative Example 2, after the sintering step ST3 and before the resin impregnation step ST4, the inorganic filaments were irradiated with X-rays and a diffraction chart was obtained. It was then confirmed that the peak of the diffraction line from the (210) plane of mullite appeared at around 2θ of 26° in the diffraction chart. FIG. 4 is a diffraction chart obtained by irradiating inorganic filaments of Comparative Example 2 with X-rays. In the diffraction chart in FIG. 4, a peak appears at around 2θ of 26°.

The average grain size of mullite crystals in the crystal structure of the inorganic filaments was calculated based on the above diffraction chart using the following general formula.

$$[Math. 1]$$

$$D_{hkl} = \frac{0.9\lambda}{\beta_{\frac{1}{2}} \cdot \cos\theta}$$

$D_{hkl}$: average grain size of the (210) plane
$\lambda$: X-ray wavelength
$\theta$: X-ray grazing incidence angle
$\beta_{1/2}$: half width of the diffraction line from the (210) plane of mullite with a crystal structure by X-ray diffraction with $2\theta$ appearing at around 26°

(Grinding Power and Wear Resistance)

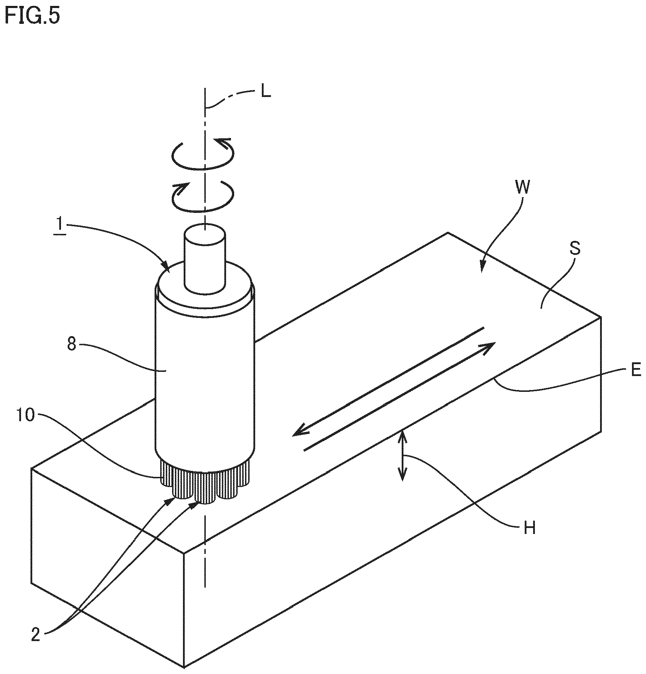

FIG. 5 is an illustration of a method of measuring grinding power and wear resistance. As illustrated in FIG. 5, in the measurement of grinding power and wear resistance, a workpiece W was subjected to a dry polishing process with a sleeve 8 attached to the polishing brush 1 in FIG. 1. The material of the workpiece W is S50C (carbon steel for machine structural use). A section to be polished in the workpiece W is an edge portion of the workpiece W that is bent at right angle. In the polishing process, the polishing brush 1 was attached to a machine tool and moved back and forth 10 times along the section to be polished while the polishing brush 1 is rotated around the axis L. The length processed is 100 mm. In the polishing process, the direction of rotation of the polishing brush 1 was reversed in the forward and backward directions.

After completion of the process, the amount of side surface dullness at the edge E in the section to be polished and the amount of wear of the wire-shaped grinding element 10 were measured. Here, when the edge portion of the workpiece W that is bent at right angle serves as a section to be polished subjected to the polishing process, the amount by which the edge E of the edge portion is chamfered is referred to as the amount of dullness. The amount of side surface dullness refers to the amount shaped off in the height direction H from the upper surface S of the workpiece W when the edge E of the edge portion of the workpiece W is shaved off by the polishing process.

The diameter of the polishing brush 1 (the diameter of the grinding element holder 3) used for the measurement is 25 mm. The wire-shaped grinding elements 10 had three kinds of bristle lengths: 75 mm, 50 mm, or 30 mm. Here, the bristle length of the grinding element is the length dimension from the grinding element-holding surface 6 of the grinding element holder 3 to the distal end of the wire-shaped grinding element 10. In the wire-shaped grinding element 10 with each bristle length, the amount of wire-shaped element exposed forward from the sleeve 8 was 15 mm. The brush resting rate by which the polishing brush 1 rests on the workpiece W is 50%. With a brush resting rate of 50%, a half of the polishing brush 1 rests on the upper surface S of the workpiece W and the other half is positioned outside the edge E. The depth of cut of the polishing brush 1 in the workpiece W is 1.0 mm. The rotational speed of the polishing brush 1 during the polishing process is 4000 revolutions per minute. The feed rate of the polishing brush 1 during the polishing process is 2500 mm/min.

The grinding power was evaluated based on the amount of side surface dullness at the edge E of the workpiece W after the polishing process. The larger the amount of side surface dullness, the greater the grinding power. The wear resistance was evaluated based on the wear length of the brush wire-shaped element after the polishing process. The shorter the wear length of the brush wire-shaped element after the polishing process, the higher the wear resistance. Table 1 lists the amounts of side surface dullness when the wire-shaped grinding elements in Examples 1 and 2 were employed and the amounts of side surface dullness when the wire-shaped grinding elements in Comparative Examples 1 and 2 were employed. Table 2 lists the amounts of wear in the wire-shaped grinding elements in Examples 1 and 2 and the amounts of wear in the wire-shaped grinding elements in Comparative Examples 1 and 2.

[Table 1]

| Bristle length (mm) | Example 1 (mm) | Example 2 (mm) | Comparative Example 1 (mm) | Comparative Example 2 (mm) |
| --- | --- | --- | --- | --- |
| 75 | 0.138 | 0.135 | 0.100 | 0.141 |

(continued)

| Bristle length (mm) | Example 1 (mm) | Example 2 (mm) | Comparative Example 1 (mm) | Comparative Example 2 (mm) |
|---|---|---|---|---|
| 50 | 0.150 | 0.147 | 0.104 | 0.154 |
| 30 | 0.181 | 0.175 | 0.123 | 0.185 |

[Table 2]

| Bristle length (mm) | Example 1 (mm) | Example 2 (mm) | Comparative Example 1 (mm) | Comparative Example 2 (mm) |
|---|---|---|---|---|
| 75 | 0.025 | 0.033 | 0.096 | 0.080 |
| 50 | 0.023 | 0.033 | 0.101 | 0.080 |
| 30 | 0.195 | 0.213 | 0.303 | 0.291 |

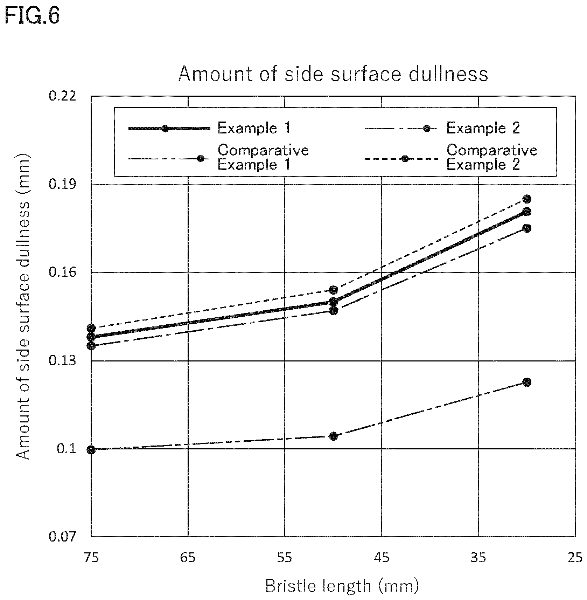

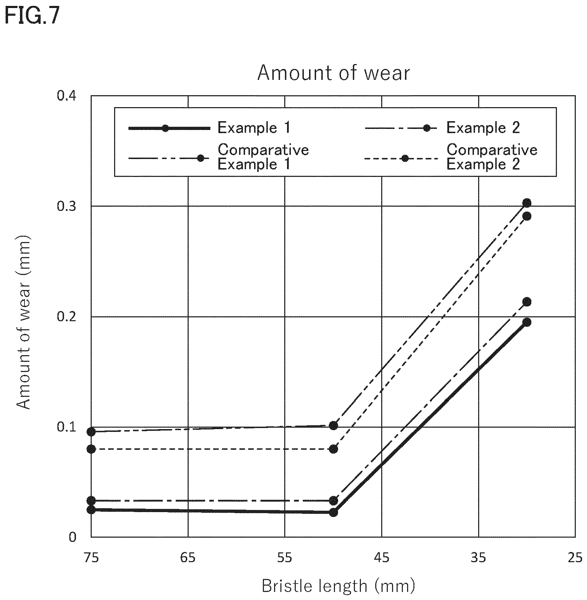

FIG. 6 is a graph illustrating the relation between the bristle length of the wire-shaped grinding element 10 and the amount of side surface dullness. FIG. 6 is a graph of the values in Table 1. FIG. 7 is a graph illustrating the relation between the bristle length of the wire-shaped grinding element 10 and the amount of wear. FIG. 7 is a graph of the values in Table 2. Here, as the bristle length decreases, the grinding power of the wire-shaped grinding element 10 increases and the amount of wear increases. This is because as the bristle length decreases, the rigidity of the wire-shaped grinding element 10 increases and the wire-shaped grinding element 10 more easily bites into the workpiece W.

As illustrated in Table 1 and FIG. 6, as for the amount of side surface dullness, there is only a difference of less than 0.006 mm between the polishing brush 1 employing the wire-shaped grinding element 10A, 10B in Example 1, 2 and the polishing brush 1 employing the wire-shaped grinding element 10 in Comparative Example 2. That is, the difference in grinding power between the polishing brush 1 employing the wire-shaped grinding element 10A, 10B in Example 1, 2 and the polishing brush 1 employing the wire-shaped grinding element 10 in Comparative Example 2 is extremely small. Therefore, the polishing brush 1 employing the wire-shaped grinding element 10A, 10B in Example 1, 2 can ensure the grinding power equivalent to that of the polishing brush 1 with mullite crystals of 25 nm or more in the crystal structure of the inorganic filaments, although the silica component of the inorganic filaments is in an amorphous state. Furthermore, if the difference in grinding power is to the extent listed in Table 1 and FIG. 6, a grinding power equivalent to that of the polishing brush 1 employing the wire-shaped grinding element 10 in Comparative Example 2 can be obtained by increasing the rotational speed during the polishing process in the polishing brush 1 employing the wire-shaped grinding element 10A, 10B in Example 1, 2.

Here, the polishing brush 1 having the wire-shaped grinding element 10A in Example 1 with the inorganic filaments having a BET specific surface area of 15 $m^2/g$ or smaller has improved grinding power, compared to the polishing brush 1 having the wire-shaped grinding element 10B in Example 2 with a BET specific surface area exceeding 15 $m^2/g$. Furthermore, the polishing brush 1 having the wire-shaped grinding element 10A in Example 1 with the inorganic filaments having a BET specific surface area of 15 $m^2/g$ or smaller has improved wear resistance, compared to the polishing brush 1 having the wire-shaped grinding element 10B in Example 2 with a BET specific surface area exceeding 15 $m^2/g$.

The polishing brush 1 employing the wire-shaped grinding element 10C in Comparative Example 1 with the inorganic filaments having a BET specific surface area of 51 $m^2/g$ does not achieve a sufficient grinding power, although the inorganic filaments contain 80% by weight of an alumina component.

As illustrated in Table 2 and FIG. 7, the amount of wear of the wire-shaped grinding element 10 in the polishing brush 1 employing the wire-shaped grinding element 10A, 10B in Example 1, 2 is obviously smaller than that of the polishing brush 1 employing the wire-shaped grinding element 10C in Comparative Example 1 or the wire-shaped grinding element 10 in Comparative Example 2. The wear resistance of the polishing brush 1 employing the wire-shaped grinding element 10A, 10B in Example 1, 2 is therefore higher than that of the polishing brush 1 employing the wire-shaped grinding element 10C, 10 in Comparative Example 1, 2.

(Operation Effects)

In the wire-shaped grinding elements 10A and 10B in the present examples, the silica component of the inorganic filaments is in an amorphous state. Thus, the crystal structure of the inorganic filaments does not have mullite crystals.

Thus, the inorganic filaments are not made brittle by mullitization.

In the wire-shaped grinding elements 10A and 10B in the present examples, the BET specific surface area of the inorganic filaments is 30 $m^2/g$ or smaller. The inorganic filaments with such a BET specific surface area have fewer pores and unevenness and therefore are prevented from absorbing moisture. Thus, it is possible to stop or prevent the inorganic filaments from absorbing moisture in the air and inhibiting curing of the resin that impregnates the inorganic filaments.

Furthermore, since the inorganic filaments with such a BET specific surface area have fewer pores and unevenness, it is possible to prevent bubbles from remaining in the resin that impregnates the inorganic filaments. Thus, it is possible to avoid nonuniform curing of the resin due to the bubbles and thus occurrence of unevenness in the wire-shaped grinding element 10. Thus, the wire-shaped grinding element 10 can be prevented from becoming brittle.

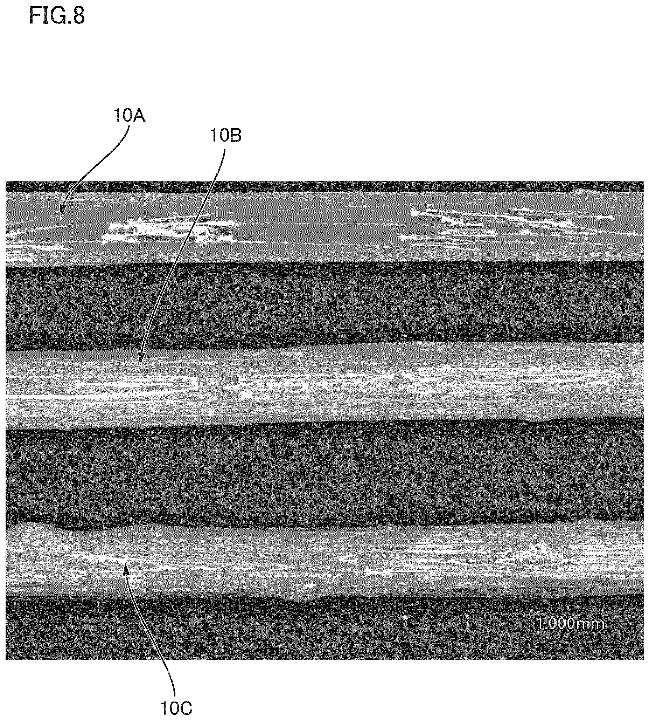

FIG. 8 is a photograph of the side surfaces of the wire-shaped grinding element 10A in Example 1, the wire-shaped grinding element 10B in Example 2, and the wire-shaped grinding element 10C in Comparative Example 1. As illustrated in FIG. 8, in the wire-shaped grinding element 10C in Comparative Example 1 with the inorganic filaments having a large BET specific surface area, unevenness occurs in its surface due to bubbles remaining in the resin. In contrast, in the wire-shaped grinding element 10A in Example 1 and the wire-shaped grinding element 10B in Example 2 with the inorganic filaments having a BET specific surface area as small as 30 $m^2/g$ or less, the occurrence of unevenness in their surfaces is prevented. This configuration can prevent the wire-shaped grinding elements 10A and 10B from becoming brittle and thus can stop or prevent brittle collapse of the wire-shaped grinding elements 10A and 10B when the wire-shaped grinding elements 10A and 10B intermittently impact a section to be polished in the workpiece W from multiple directions. As a result, the wear resistance of the wire-shaped grinding elements 10A and 10B is improved.

On the other hand, in the wire-shaped grinding elements 10A and 10B in the present examples, the inorganic filaments contain 80% by weight or more of an alumina component. Thus, it is easier to ensure the hardness of the inorganic filaments. As mentioned above, the inorganic filaments with a BET specific surface area of 30 $m^2/g$ or smaller can prevent the wire-shaped grinding elements 10A and 10B from becoming brittle due to moisture absorption which would inhibit curing of the resin. In addition, since the occurrence of unevenness in the surface is prevented in the wire-shaped grinding elements 10A and 10B with inorganic filaments having a BET specific surface area of 30 $m^2/g$ or smaller, the wire-shaped grinding elements 10A and 10B are prevented from becoming brittle. In addition to this, unlike a grinder that performs polishing with a grinding element in contact with the upper surface S of the workpiece W, the wire-shaped grinding elements 10A and 10B intermittently impact the section to be polished in the workpiece W from multiple directions when the workpiece W is polished. Thus, the grinding power of the wire-shaped grinding elements 10A and 10B can be ensured although their crystal structure does not include mullite crystals.

Here, in the wire-shaped grinding element 10A in Example 1 with the inorganic filaments having a BET specific surface area of 15 $m^2/g$ or smaller, the occurrence of unevenness in its surface is prevented more completely compared to the wire-shaped grinding element 10B in Example 2. Thus, the wire-shaped grinding element 10A is prevented more completely from becoming brittle. Thus, the wire-shaped grinding element 10A in Example 1 has greater grinding power and higher wear resistance than the wire-shaped grinding element 10B in Example 2.

When the inorganic filaments contain 85% by weight or more of an alumina component as in the wire-shaped grinding element 10A in Example 1 and the wire-shaped grinding element 10B in Example 2, the hardness of the inorganic filaments can be increased compared to when the alumina component is lower than 85% by weight. Thus, it is easier to ensure the grinding power of the polishing brush 1.

**Claims**

1. A wire-shaped grinding element for a polishing brush, comprising:

   inorganic filaments; and
   a resin that impregnates the inorganic filaments and is cured, wherein
   the inorganic filaments contain 80 to 90% by weight of an alumina component and 20 to 10% by weight of a silica component,
   the inorganic filaments have a crystal structure including intermediate alumina,
   the silica component is in an amorphous state, and
   the inorganic filaments have a BET specific surface area of 30 $m^2/g$ or smaller.

2. The wire-shaped grinding element for a polishing brush according to claim 1, wherein the BET specific surface area of the inorganic filaments is 15 $m^2/g$ or smaller.

3. The wire-shaped grinding element for a polishing brush according to claim 1, wherein the alumina component of the inorganic filaments is 85% by weight or more.

4. The wire-shaped grinding element for a polishing brush according to claim 1, wherein the resin is an epoxy resin.

5. A polishing brush comprising:

a plurality of wire-shaped grinding elements disposed in parallel with each other; and
a grinding element holder that holds one end portion of each of the wire-shaped grinding elements,
wherein each of the wire-shaped grinding elements is the wire-shaped grinding element for a polishing brush
according to claim 1.

FIG.1

FIG.2

```
        ┌──────────────┐
        │    Start      │
        └──────┬───────┘
               │
               ▼
    ┌─────────────────────┐╮  ST1
    │   Spinning step      │
    └──────────┬──────────┘
               │
               ▼
    ┌─────────────────────┐╮  ST2
    │  Pre-sintering step  │
    └──────────┬──────────┘
               │
               ▼
    ┌─────────────────────┐╮  ST3
    │   Sintering step     │
    └──────────┬──────────┘
               │
               ▼
    ┌─────────────────────┐╮  ST4
    │ Resin impregnation step │
    └──────────┬──────────┘
               │
               ▼
    ┌─────────────────────┐╮  ST5
    │   Shaping step       │
    └──────────┬──────────┘
               │
               ▼
        ┌──────────────┐
        │    End        │
        └──────────────┘
```

FIG.3

the (210) plane

FIG.4

the (210) plane

FIG.5

## FIG.6

Amount of side surface dullness

FIG.7

Amount of wear

FIG.8

## INTERNATIONAL SEARCH REPORT

| International application No. |
|---|
| **PCT/JP2021/034351** |

### A. CLASSIFICATION OF SUBJECT MATTER

***B24D 3/00***(2006.01)i; ***C09K 3/14***(2006.01)i
FI:  C09K3/14 550D; C09K3/14 550J; B24D3/00 320Z

According to International Patent Classification (IPC) or to both national classification and IPC

### B. FIELDS SEARCHED

Minimum documentation searched (classification system followed by classification symbols)

B24D3/00; C09K3/14

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | WO 2014/208566 A1 (TAIMEI CHEMICALS CO., LTD.) 31 December 2014 (2014-12-31) claims 1, 10, paragraphs [0023], [0024], fig. 1-8 | 1-5 |
| Y | WO 2018/012423 A1 (MITSUBISHI CHEMICAL CORP.) 18 January 2018 (2018-01-18) claims 1, 8, paragraphs [0007], [0029], [0035], examples 1, 2 | 1-5 |
| Y | JP 10-183427 A (TAIMEI CHEMICALS CO., LTD.) 14 July 1998 (1998-07-14) claims 1, 2, paragraph [0009] | 1-5 |
| Y | JP 10-217131 A (XEBEC TECHNOLOGY CO., LTD.) 18 August 1998 (1998-08-18) example 1 | 1-5 |
| A | JP 2018-165425 A (MITSUBISHI CHEMICAL CORP.) 25 October 2018 (2018-10-25) paragraph [0022] | 1-5 |
| A | WO 2014/115814 A1 (DENKI KAGAKU KOGYO KK) 31 July 2014 (2014-07-31) paragraph [0026] | 1-5 |

| ☐ Further documents are listed in the continuation of Box C. | ☑ See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **25 November 2021** | **07 December 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2021/034351**

| Patent document cited in search report | | | Publication date (day/month/year) | Patent family member(s) | | | Publication date (day/month/year) |
|---|---|---|---|---|---|---|---|
| WO | 2014/208566 | A1 | 31 December 2014 | US 2016/0128461 A1<br>claims 1, 10, paragraphs [0030], [0031], fig. 1-8<br>CN 105324214 A | | | |
| WO | 2018/012423 | A1 | 18 January 2018 | US 2019/0145031 A1<br>claims 1, 8, paragraphs [0009], [0045], [0051], examples 1, 2<br>EP 3483320 A1<br>CN 109312510 A<br>KR 10-2019-0028660 A | | | |
| JP | 10-183427 | A | 14 July 1998 | (Family: none) | | | |
| JP | 10-217131 | A | 18 August 1998 | (Family: none) | | | |
| JP | 2018-165425 | A | 25 October 2018 | (Family: none) | | | |
| WO | 2014/115814 | A1 | 31 July 2014 | US 2015/0354099 A1<br>paragraph [0036]<br>EP 2949791 A1<br>CN 105051272 A<br>BR 112015017545 A | | | |

Form PCT/ISA/210 (patent family annex) (January 2015)

**EP 4 403 306 A1**

**Patent documents cited in the description**

- JP H10183427 A

- WO 2014208566 A